# EUROPEAN PATENT APPLICATION

(11) **EP 4 734 255 A1**
(43) Date of publication of application: **29.04.2026**
(21) Application number: 25210333.8
(22) Date of filing: 22.10.2025
(51) Int. Cl.: H01M 50/247, H01M 50/202, H01M 50/244, H01M 50/262

(54) **SECONDARY BATTERY AND ELECTRONIC DEVICE INCLUDING SAME**

(30) Priority: 24.10.2024 KR 20240146729
(71) Applicant: SAMSUNG SDI CO., LTD., Yongin-si, Gyeonggi-do 17084 (KR)
(72) Inventor: KIM, Sungyeon, 17084 Yongin-si, Gyeonggi-do (KR); KO, Kyungsuk, 17084 Yongin-si, Gyeonggi-do (KR)
(74) Representative: Bardehle Pagenberg Partnerschaft mbB Patentanwälte Rechtsanwälte

(57) **Abstract**

A secondary battery includes: an electrode assembly; and a case (100) accommodating the electrode assembly, and including: a body (110) accommodating the electrode assembly; a fixing bar (120) extending from one side of the body, and having a coupling hole (102) penetrating therethrough for fastening with a coupling substrate (200); and a first coupling portion (130) on an opposite side of the body to be connected to a second coupling portion (230) of the coupling substrate (200).

## Description

### BACKGROUND

### 1. Field

Aspects of embodiments of the present disclosure relate to a secondary battery, and an electronic device including the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, laptop computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In accordance with various regulations related to the environment, electronic devices are adopting secondary batteries that are structurally replaceable.

The above information disclosed in this Background section is for enhancement of understanding of the background of the present disclosure, and therefore, it may contain information that does not constitute related (or prior) art.

### SUMMARY

An example of secondary batteries that are replaceable is a secondary battery that has a case made of a metal to be connected to an electronic device by a bolt. However, when the secondary battery is connected to the electronic device using the bolt, the ease of attachment or detachment of the secondary battery may be deteriorated.

Embodiments of the present disclosure may be directed to a secondary battery, and an electronic device including the secondary battery.

These and other aspects and features of the present disclosure will be described in or will be apparent from the following description of embodiments of the present disclosure.
According to the present invention, a secondary battery and an electronic device as claimed in claims 1 and 10 are provided. Preferred embodiments of the invention are described in the dependent claims.

According to one or more embodiments of the present disclosure, a secondary battery includes: an electrode assembly; and a case accommodating the electrode assembly, and including: a body accommodating the electrode assembly; a fixing bar extending from one side of the body, and having a coupling hole penetrating therethrough for fastening with a coupling substrate; and a first coupling portion on an opposite side of the body to be connected to a second coupling portion of the coupling substrate.

In an embodiment, the body may include steel use stainless (SUS).

In an embodiment, the secondary battery may further include: a first plate extending in contact with one surface of the body, and interposed between the body and the fixing bar; and a second plate extending in contact with another surface of the body, and interposed between the body and the second coupling portion. The first plate and the second plate may include a different metal from that of the body, and may be coupled to the body by welding.

In an embodiment, the body may include steel use stainless (SUS); and the first plate and the second plate may include a metal material containing at least nickel.

In an embodiment, the fixing bar of the case may be connected to the coupling substrate by a bolt inserted into the coupling hole; the first coupling portion of the case may include a hinge; and the second coupling portion of the coupling substrate may include a hinge pin coupled to the hinge.

In an embodiment, an extension length of each of an upper part of the hinge configured to support an upper part of the hinge pin and a lower part of the hinge may be 1/4 to 1 of a diameter of the hinge pin.

In an embodiment, the fixing bar and the first coupling portion may include one of aluminum, steel use stainless (SUS), or maraging steel.

In an embodiment, the first coupling portion may include a first hook portion protruding from the opposite side of the body, and bent downward; and the second coupling portion may include a second hook portion configured to be interlocked with the first hook portion and connected to the first hook portion.

In an embodiment, the first hook portion may include one or more curved portions on a surface facing the second hook portion.

According to one or more embodiments of the present disclosure, an electronic device includes: a secondary battery including a case housing an electrode assembly; and a coupling substrate configured to be attached to or detached from the case. The case includes: a body accommodating the electrode assembly; a fixing bar extending from one side of the body, and having a coupling hole penetrating therethrough for fastening with the coupling substrate; and a first coupling portion on an opposite side of the body to be connected to the coupling substrate. The coupling substrate includes: a settling portion configured to receive the body settled therein; a second coupling portion configured to be connected to the first coupling portion; and a settling bar configured to be connected to the fixing bar, and having a coupling hole corresponding to the coupling hole of the fixing bar.

In an embodiment, the body may include steel use stainless (SUS).

In an embodiment, the secondary battery may further include: a first plate extending in contact with one surface of the body, and interposed between the body and the fixing bar; and a second plate extending in contact with another surface of the body, and interposed between the body and the second coupling portion. The first plate and the second plate may include a metal material containing nickel, the body may include steel use stainless (SUS), and the first plate and the second plate may be coupled to the body by welding.

In an embodiment, the fixing bar of the case may be connected to the coupling substrate by a bolt inserted into the coupling hole of the fixing bar and the coupling hole of the settling bar; the first coupling portion of the case may include a hinge; and the second coupling portion of the coupling substrate may include a hinge pin coupled to the hinge.

In an embodiment, the hinge pin may include a pin to be coupled with the hinge, and two support members connected to respective ends of the pin to support the pin.

In an embodiment, the coupling substrate may further include an elastic body located at a lower portion of the second coupling portion to elastically support the first coupling portion.

In an embodiment, the elastic body may include an inclined surface or a curved surface in contact with a lower end of a hinge.

In an embodiment, the first coupling portion may include a first hook portion protruding from the opposite side of the body, and bent downward; and the second coupling portion may include a second hook portion configured to be interlocked with the first hook portion to be connected thereto.

In an embodiment, the first hook portion may include at least one curved portion on a surface facing the second hook portion.

In an embodiment, the settling bar of the coupling substrate may be configured to guide the body of the case to be inserted into a settling space; and the second coupling portion of the coupling substrate may include a catch portion configured to allow the first coupling portion of the case to be inserted therein.

In an embodiment, the settling bar may include: an upper surface having the coupling hole; a guide surface extending from the upper surface, and inclined downward; an end portion extending downward from the guide surface; and a settling portion configured to receive the case. The catch portion may include: an inclined surface configured to guide insertion of the first coupling portion of the case; a restraining surface extending laterally from the inclined surface; and a stop surface extending downward from the restraining surface.

According to some embodiments of the present disclosure, a case of a secondary battery may be coupled by a bolt on one side, and may have a structure in which a position of the coupling may be determined and facilitate the coupling from another side, so that the secondary battery may be more easily coupled with electronic devices and the like, and a strong bonding force may be maintained when the secondary battery is coupled with the electronic devices and the like.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a secondary battery being coupled to a coupling substrate according to some embodiments of the present disclosure.
FIG. 2 illustrates a secondary battery being coupled to a coupling substrate according to some embodiments of the present disclosure.
FIGS. 3 and 4 show examples of a first plate and a second plate being coupled to a body according to some embodiments of the present disclosure.
FIG. 5 is an exploded perspective view of a secondary battery including an electrode assembly according to some embodiments of the present disclosure.
FIG. 6 is a side view showing a secondary battery being coupled to a coupling substrate by a hinge and a hinge pin according to some embodiments of the present disclosure.
FIG. 7 is an enlarged view of the area A shown in FIG. 6.
FIG. 8 illustrates an example of the shape of an upper part and a lower part of a hinge of a body of a case according to some embodiments of the present disclosure.
FIG. 9 shows a hinge pin including a pin and a fixing member according to some embodiments of the present disclosure.
FIG. 10 shows a hinge pin including a pin and a fixing member according to some embodiments of the present disclosure.
FIG. 11 shows the case being rotated around the hinge connected to the hinge pin and is seated on the coupling substrate according to some embodiments of the present disclosure.
FIGS. 12-15 show various kinds of elastic bodies according to some embodiments of the present disclosure.
FIG. 16 is a side view of the secondary battery coupled to the coupling substrate according to some embodiments of the present disclosure.
FIG. 17 shows a secondary battery being coupled with a coupling substrate according to some embodiments of the present disclosure.
FIG. 18 is an enlarged view of the portion B of FIG. 17 where a first hook portion of the secondary battery is coupled with a second hook portion of a coupling substrate according to some embodiments of the present disclosure.
FIG. 19 is a side view of the secondary battery coupled to the coupling substrate according to some embodiments of the present disclosure.
FIG. 20 shows a secondary battery that has not yet been coupled to a coupling substrate according to some embodiments of the present disclosure.
FIG. 21 shows the secondary battery coupled to the coupling substrate according to some embodiments of the present disclosure.
FIG. 22 is an enlarged view of a catch portion of the coupling substrate according to some embodiments of the present disclosure.
FIG. 23 is an enlarged view of a settling bar of the coupling substrate according to some embodiments of the present disclosure.
FIG. 24 illustrates an electronic device to which a secondary battery has been applied according to some embodiments of the present disclosure.
FIG. 25 is a view of the electronic device including the secondary battery and a display according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

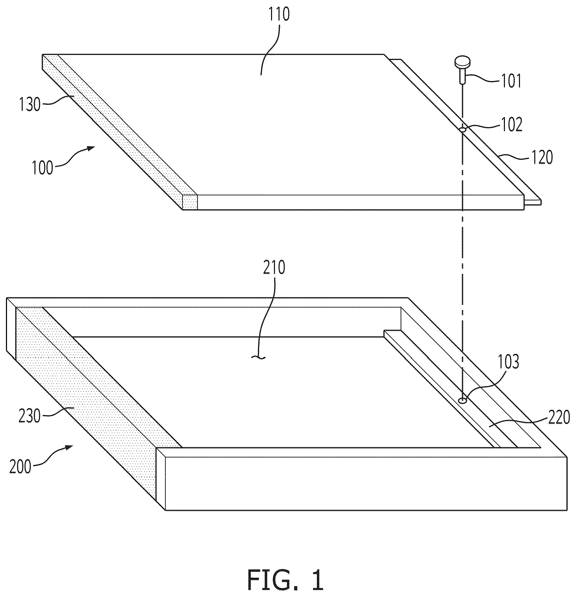

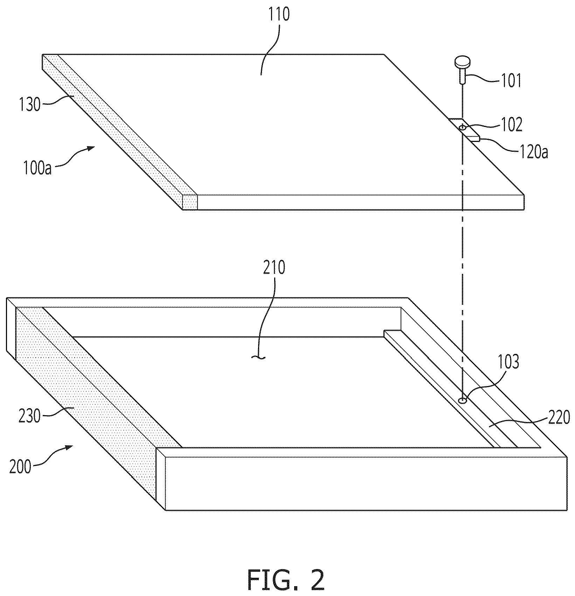

FIG. 1 illustrates a secondary battery being coupled to a coupling substrate according to some embodiments of the present disclosure. FIG. 2 illustrates a secondary battery being coupled to a coupling substrate according to some embodiments of the present disclosure.

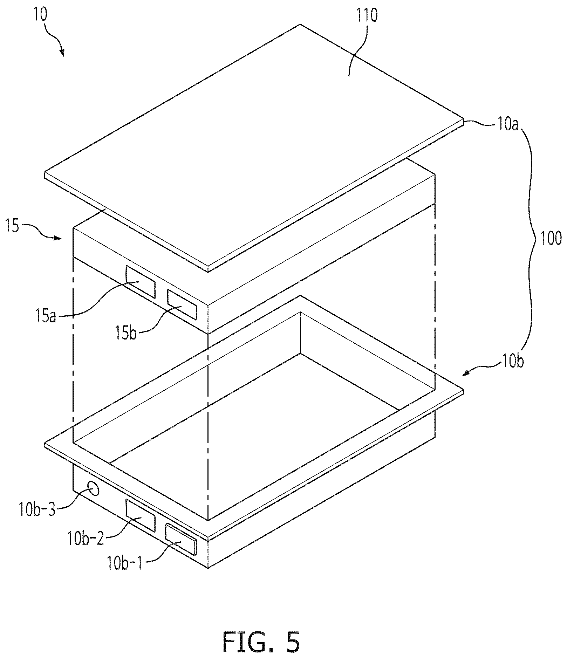

Referring to FIGS. 1 and 2, the secondary battery according to some embodiments of the present disclosure may include an electrode assembly 15 (e.g., see FIG. 5), and a case 100 that accommodates the electrode assembly. The case 100 may include a body 110 that houses the electrode assembly 15, a fixing bar 120 that extends from one side of the body 110 and has a coupling hole 102 penetrated therethrough for fastening with a coupling substrate 200, and a first coupling portion 130 that is formed on another side (e.g., an opposite side) of the body 110 to be connected to a second coupling portion 230 of the coupling substrate 200.

The coupling substrate 200 may be a substrate to which a secondary battery may be coupled, or may be a frame or a substrate for allowing a secondary battery to be accommodated on one side of an electronic device or therein, for example. In this case, the electronic device may include the secondary battery including the case 100 that accommodates the electrode assembly 15, and the coupling substrate 200 that the case 100 may be attached to or detached from. As an example, the electronic device may be a smartphone. In other words, in order to gain power from a secondary battery, the coupling substrate 200 may include a space for accommodating the case of the secondary battery, and a coupling portion to which the case of the secondary battery may be coupled, so that the secondary battery may be coupled to the coupling substrate 200. The coupling portion may include the fixing bar 120 fixed to a settling bar 220 of the coupling substrate 200 by a bolt 101, and the second coupling portion 230 that corresponds to the first coupling portion 130 formed on the other side of the body 110 and is connected thereto. The second coupling portion 230 may structurally restrain the first coupling portion 130. The first coupling portion 130 and the second coupling portion 230 will be described in more detail below.

As an example, the fixing bar 120 may extend over the entire length of one side of the body 110, and may include the coupling hole 102 formed at a suitable point (e.g., a specific or predetermined point) in the length direction in which the fixing bar 120 extends. As another example, a fixing bar 120a may protrude from a portion of the body 110, and may have the coupling hole 102 through which the bolt 101 can pass. As such, the fixing bar 120 may be coupled to the settling bar 220, so a coupling hole 103 on the settling bar 220 and the coupling hole 102 on the fixing bar 120 and 120a may be on the same line as each other when the settling bar 220 and the fixing bar 120 and 120a are arranged to be coupled to each other.

At least the body 110 among the components of the case 100 may be formed of steel use stainless (SUS). For example, the body 110, the fixing bar 120, and the first coupling portion 130 may be formed as one piece through forming of steel use stainless (SUS), but the components may also be formed separately and coupled to each other.

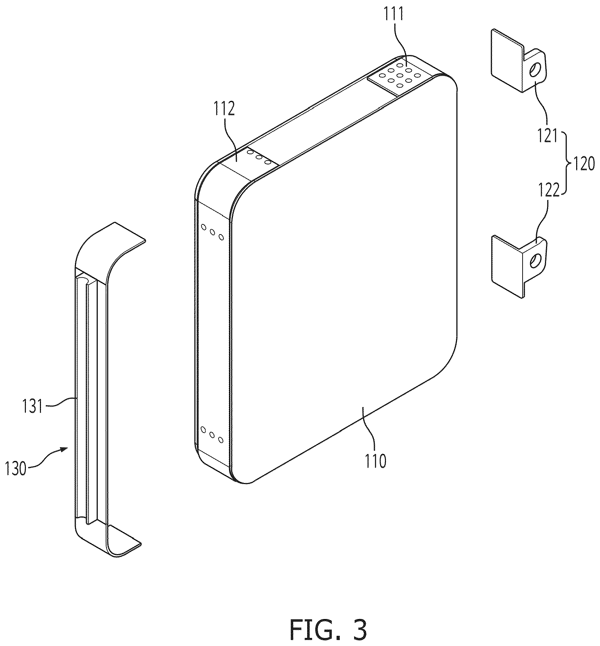

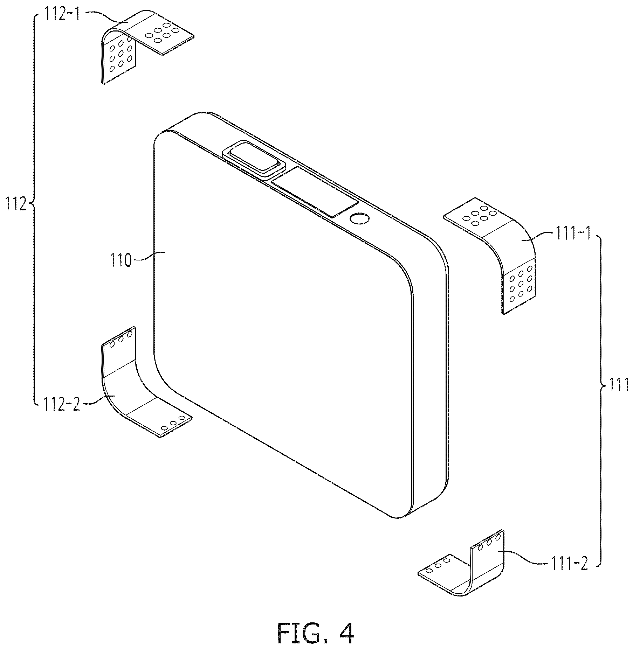

FIGS. 3 and 4 show examples of a first plate and a second plate being coupled to the body according to some embodiments of the present disclosure.

Referring to FIG. 3, the secondary battery may further include a first plate 111 and a second plate 112. The first plate 111 may extend in contact with one surface of the body 110, and may be interposed between the body 110 and the fixing bar 120. The second plate 112 may extend in contact with another surface (e.g., an opposite surface) of the body 110, and may be interposed between the body 110 and the second coupling portion 130. The first plate 111 and the second plate 112 may be formed of a dissimilar metal (e.g., a different metal) from that of the body 110, and may be coupled to the body 110 by welding.

In some embodiments, the body 110 may be formed of steel use stainless (SUS), and the first plate 111 and the second plate 112 may be formed of a metal material including nickel. For example, the fixing bar 120 and the first coupling portion 130 may be formed of a metal material including any one of aluminum, steel use stainless (SUS), or maraging steel. Each of the first plate 111 and the second plate 112 may be welded to the body 110 using a laser or the like. As illustrated in FIGS. 3 and 4, the first plate 111 may be coupled to one side of the body 110, and the second plate 112 may be coupled to the other side (e.g., the opposite side) of the body 110.

In some embodiments, as shown in FIG. 4, the first plate 111 (e.g., 111-1 and 111-2) and the second plate 112 (e.g., 112-1 and 112-2) may each include a pair of plates. In this case, the pair of first plates 111-1 and 111-2 may be coupled with the fixing bar 120, and the pair of second plates 112-1 and 112-2 may be coupled with the first coupling portion 130. For example, each of the pair of first plates 111-1 and 111-2 may be coupled to the fixing bar 120 including a pair of fixing brackets 121 and 122 (e.g., see FIG. 3). In some embodiments, when the first coupling portion 130 is coupled across an entirety of one side of the body 110, it may be coupled to the second plate 112 formed as one piece. As a result, it may be possible to more easily couple the fixing bar 120 and the first coupling portion 130 to the body 110, and improve the rigidity of the body 110.

FIG. 5 is an exploded perspective view of a secondary battery 10 including the electrode assembly 15 according to some embodiments of the present disclosure.

Referring to FIG. 5, the secondary battery 10 according to some embodiments of the present disclosure may include the electrode assembly 15, a three-dimensional body 110, and the case 100. The electrode assembly 15 may include a first electrode having a first electrode tab 15a, and a second electrode having a second electrode tab 15b. The body 110 may have a space 10b for accommodating the electrode assembly 15, and the case 100 may include a flange extending horizontally from an open end of the body 110 to surround (e.g., around a periphery of) the accommodating space 10b (e.g., in a plan view). For example, the secondary battery 10 may include a cover 10a of the case 100 that is placed on the upper part of the body 110 and coupled with the flange to seal the accommodating space 10b. Although the cover 10a of the case 100 are shown as being separated from the body 110 in FIG. 5, the body 110 and the cover 10a may be collectively referred to as the case 100.

The electrode assembly 15 may be wound or laminated with a separator, which is an insulator, interposed between the first electrode corresponding to a positive electrode and the second electrode corresponding to a negative electrode. The secondary battery 10 shown in FIG. 5 may be a stainless use steel (SUS)-can-type secondary battery, but the present disclosure is not limited thereto, and the secondary battery 10 may be various suitable kinds of secondary batteries 10.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

The electrode assembly 15 may include the first electrode tab 15a connected to one side of the first electrode, and the second electrode tab 15b connected to one side of the second electrode. The first electrode tab 15a and the second electrode tab 15b may be connected to the first electrode and the second electrode, respectively, by welding the tabs to the uncoated portions of the first and second electrodes. The first electrode tab 15a and the second electrode tab 15b may be formed by punching out the uncoated portions of the first and second electrodes, respectively. The first electrode tab 15a and the second electrode tab 15b, after the electrode assembly 15 has been wound, may be arranged in parallel or substantially in parallel with each other with a suitable distance (e.g., a certain or predetermined distance) therebetween. The first electrode may be a positive electrode, and the second electrode may be a negative electrode. However, the first electrode may be the negative electrode, and the second electrode may be the positive electrode. In other embodiments, the electrode assembly 15 may have any suitable structure including an electrode tab.

The case 100 may form the overall appearance of the secondary battery 10, and may be formed of a conductive metal, such as aluminum, an aluminum alloy, or a nickel-plated steel. According to some embodiments of the present disclosure, the case 100 may include a metallic material, such as stainless use steel (SUS) and/or aluminum (Al). However, the present disclosure is not limited thereto, and the case 100 may be formed of various suitable metallic materials having a desired strength and a desired resistance to external impacts for the secondary battery 10. In some embodiments, the case 100 may include the body 110 having the space 10b for accommodating the electrode assembly 15, and the flange extending horizontally from the open end of the body 110 to surround (e.g., around a periphery of) the accommodating space 10b (e.g., in a plan view). The space 10b for accommodating the electrode assembly 15 may be formed in the body 110 through a pressing processing or the like. The accommodating space 10b of the case 100 may be formed in a square shape, for example, and the flange may be formed as extending from the open end of the body 110 in a direction parallel to or substantially parallel to the four corners of the square shape in the horizontal direction of the body 110 to surround (e.g., around a periphery of) the accommodating space 10b.

According to some embodiments of the present disclosure, the secondary battery 10 may include the cover 10a disposed on the upper portion of the case 100, and coupled with the flange to seal the accommodating space 10b. The cover 10a may be formed as a flat plate placed on the upper part of the case 100 to seal the accommodating space 10b. For example, the cover 10a may be formed as a flat plate having a size sufficient to cover the body 110 and the flange, and may be in surface contact with the flange. In other words, the lower surface of the cover 10a may be in surface contact with the upper surface of the flange. As the flange and the cover 10a are joined together, a structure in which the body 110 and the cover 10a are joined to each other may be formed. In some embodiments, the body 110 may be joined to the cover 10a by laser welding. However, the present disclosure is not limited thereto, and the case 10a may be sealed through various suitable joining methods. For example, the cover 10a and the flange of the body 110 may be joined to each other by laser welding, and/or ultrasonic welding, brazing, laser brazing, welding, soldering, or the like.

According to some embodiments, the cover 10a may be formed of the same or substantially the same metallic material as that of the body 110. Like the body 110, the cover 10a may be formed of stainless use steel (SUS), aluminum (Al), and/or the like.

A first electrode terminal 10b-2 electrically connected to the first electrode 15a of the electrode assembly 15 and a second electrode terminal 10b-1 electrically connected to the second electrode 15b of the electrode assembly 15 may be coupled to the body 110. For example, the first and second electrode terminals 10b-2 and 10b-1 may be arranged on at least one surface of the case 100. However, the positions of the first and second electrode terminals 10b-2 and 10b-1 are not limited to the positions shown in FIG. 5, and may be variously modified as needed or desired according to some embodiments.

In some embodiments, the case 100 may include an electrolyte injection inlet 10b-3. For example, the electrolyte injection inlet 10b-3 may be a hole formed on at least one surface of the case 100 (e.g., on at least one surface of the body 110), and may be formed to inject an electrolyte into the case 100 after the body 110 and the cover 10a are joined together and sealed. The electrolyte injection inlet 10b-3 may be sealed with a sealing member after the electrolyte has been injected into the case 100.

The secondary battery 10 may be a lithium battery cell, a sodium battery cell, or the like. However, the present disclosure is not limited thereto, and the secondary battery 10 may include any suitable kind of battery that may repeatedly provide electricity by charging and discharging. In some embodiments, when the secondary battery 10 is a lithium battery cell, it may be used for an electric vehicle (EV), because it may have excellent life properties and high-rate properties. For example, the lithium battery cell may be used for hybrid vehicles, such as plug-in hybrid electric vehicles (PHEV). The lithium battery cell may be used in various suitable fields that require or desire storage of a large amount of power, such as electric bicycles and power tools, but the present disclosure is not limited thereto.

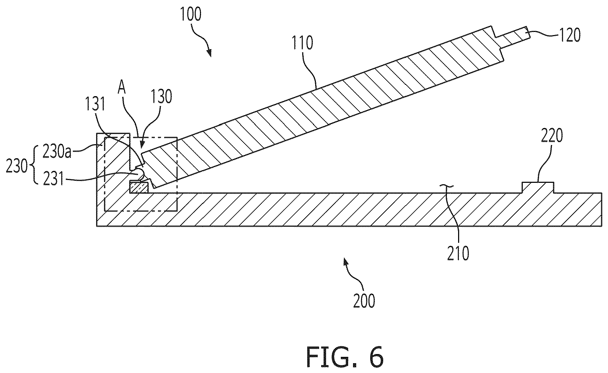

FIG. 6 is a side view showing a secondary battery being coupled to a coupling substrate by a hinge 131 and a hinge pin 231 according to some embodiments of the present disclosure. Hereinafter, the embodiment illustrated in FIG. 6 may be referred to as a first embodiment.

Referring to FIG. 6, the fixing bar 120 of the case 100 of the secondary battery may be connected to the coupling substrate 200 by the bolt 101 (e.g., see FIGS. 1 and 2) inserted into the coupling hole 102. In some embodiments, the first coupling portion 130 of the body 110 may include the hinge 131, and the second coupling portion 230 of the coupling substrate 200 may include the hinge pin 231 protruding from a frame 230a of the coupling substrate 200 to be coupled to the hinge 131. As the hinge 131 and the hinge pin 231 are connected to each other, it may be possible for the case 100 to rotate around the hinge pin 231. In other words, the first coupling portion 130 of the case 100 may be fixed to the second coupling portion 230 of the coupling substrate 200, and may freely rotate around the hinge pin 231. As a result, the body 110 of the case 100 may be settled in a settling space 210 of the coupling substrate 200 through the rotation, and with the body 110 and the coupling substrate 200 in contact with each other, the first coupling portion 120 may be fixed to the settling bar 220 by the bolt 101. Accordingly, the case 100 may be fixed to the coupling substrate 200 on one side by the bolt 101, and may fixed to the coupling substrate 200 on another side (e.g., an opposite side) by a connection between the hinge 131 and the hinge pin 231.

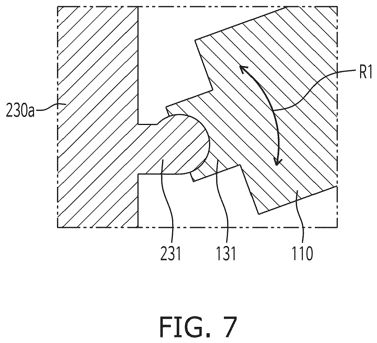

FIG. 7 is an enlarged view of the area A shown in FIG. 6.

Referring to FIG. 7, the hinge 131 may be coupled with the hinge pin 231 to form a rotation range (e.g., a predetermined rotation range) R1. The rotation range R1 may correspond to a range including the angle formed when the hinge 131 of the body 110 first comes in contact with the hinge pin 231 of the frame 230a to the angle formed when the body 110 is settled in the settling space 210. FIG. 7 shows the hinge 131 formed in the center of one side of the body 110, but the present disclosure is not limited thereto, and the hinge 131 may be formed at the upper end or the lower end of the one side of the body 110.

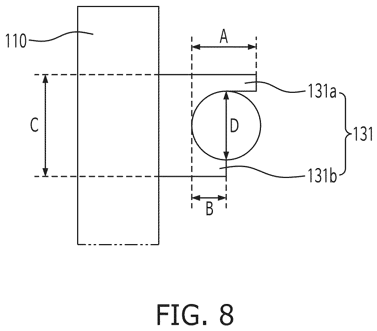

FIG. 8 illustrates an example of the shape of an upper part 131a and a lower part 131b of the hinge 131 of the body of the case according to some embodiments of the present disclosure. For example, the embodiment of FIG. 8 may correspond to the first embodiment described above.

Referring to FIG. 8, an extension length A of the upper part 131a of the hinge 131 that supports the upper part of the hinge pin formed on one side of the coupling substrate may be 1/4 to 1 of a diameter D of the hinge pin. Similarly, an extension length B of the lower part 131b of the hinge 131 that supports the lower part of the hinge pin may be 1/4 to 1 of the diameter D of the hinge pin. In some embodiments, as illustrated in FIG. 8, in order to allow the hinge 131 to rotate more smoothly around the hinge pin, the extension length B of the lower part 131b of the hinge 131 may be shorter than the extension length A of the upper part 131a of the hinge 131. The extension lengths and the ratio of the extension lengths of the upper and lower parts of the hinge 131 may be formed as described above, thereby preventing or substantially preventing the hinge pin 231 from being separated from the hinge 131, and allowing the coupling of the hinge 131 with the hinge pin 231 more easily.

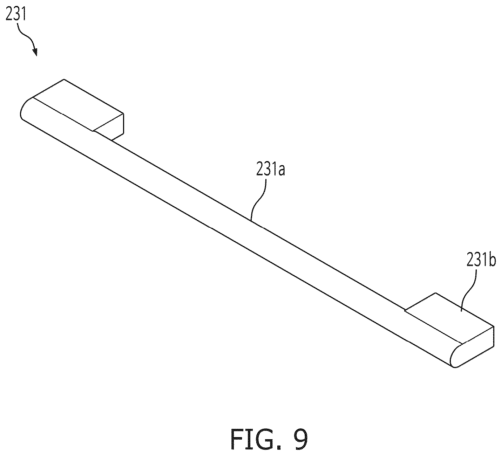

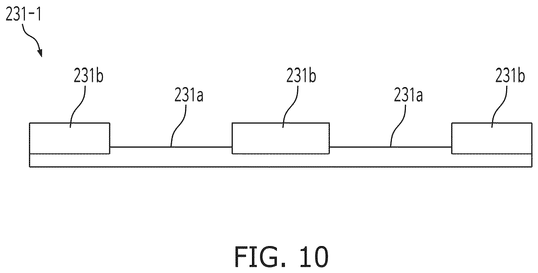

FIG. 9 shows a hinge pin including a pin and a fixing member according to some embodiments of the present disclosure. FIG. 10 shows a hinge pin including a pin and a fixing member according to some embodiments of the present disclosure. FIGS. 9 and 10 each show the hinge pin including the pin and the fixing member according to the first embodiment described above. The hinge pin 231 and 231-1 in FIGS. 9 and 10 may be formed to face one side of the body 110 of the case.

Referring to FIG. 9, the hinge pin 231 may include a pin 231a to be coupled with the hinge 131, and two support members 231b connected to respective ends of the pin 231a to support the pin 231a. The two support members 231b may be fixed and connected to one side of the body 110 of the case, and in this case, the pin 231a may be supported by the support members 231b and spaced apart from the one side of the body 110 of the case by a suitable distance (e.g., a certain or predetermined distance). As another example, the two support member 231b may be fixed and connected to one inner side of the second coupling portion 230 of the coupling substrate 200, and may support the pin 231a to be spaced apart from the one inner side of the second coupling portion 230.

As another example, referring to FIG. 10, the hinge pin 231-1 may include the pin 231a to be coupled with the hinge 131, and a plurality of support members 231b respectively connected to both ends (e.g., opposite ends) and a middle part of the pin 231a and spaced apart from each other.

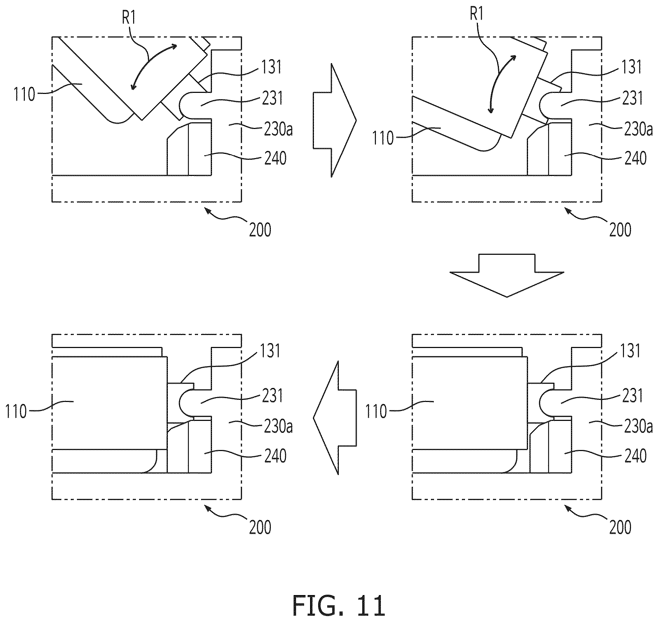

FIG. 11 shows the case being rotated around the hinge connected to the hinge pin and is seated on the coupling substrate according to some embodiments of the present disclosure. The embodiment illustrated in FIG. 11 may correspond to the first embodiment described above.

Referring to FIG. 11, the coupling substrate 200 may further include an elastic body 240 that supports the hinge 131 when the case rotates as the hinge 131 is connected to the hinge pin 231. The elastic body 240 may be elastically deformed by being pressed by the hinge 131 when the body 110 moves downward by the rotation of the hinge 131 and is settled in the settling space 210. The elastic body 240 may be elastically deformed and expanded laterally when pressed from above by the hinge 131. The elastic body 240 expanded laterally may elastically support the hinge 131 of the body 110, which has been seated in the settling space 210.

The elastic body 240 may have an inclined surface, and the inclined surface may be in contact with the lower end or the bottom of the hinge 131. The inclined surface may be a surface including one or more flat or substantially flat surfaces, or may be a curved surface.

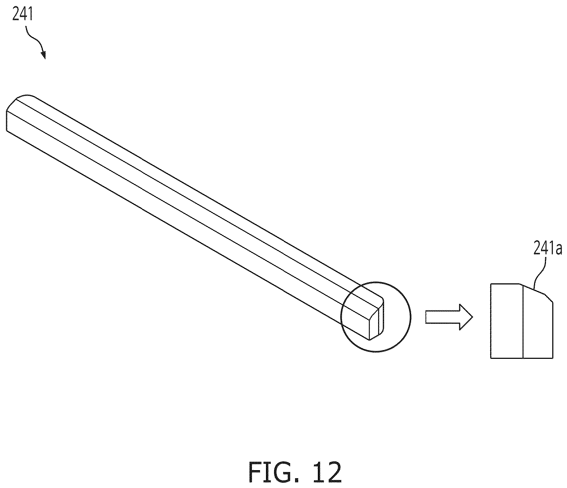

FIGS. 12 through 15 show various kinds of elastic bodies 241, 242, 243, and 244 according to some embodiments of the present disclosure. The embodiments illustrated in FIGS. 12 through 15 may correspond to the first embodiment described above.

The elastic body 241, 242, 243, and 244 illustrated in FIGS. 12 to 15 may be placed below the second coupling portion, such as the hinge pin, formed on one side of the coupling substrate 200. The elastic body 241, 242, 243, and 244 may be arranged below the second coupling portion, and may elastically support the first coupling portion, such as the hinge, formed on one side of the body of the case.

Referring to FIG. 12, the elastic body 241 may have the shape of a long rod with a square cross-section. An inclined portion 241a may be formed at one edge of the square cross-section of the elastic body 241. The inclined portion 241a may support the hinge 131 upwardly, and may be elastically deformed when the body 110 is seated in the settling space 210. In this case, the elastic body 241 may be elastically deformed and expanded laterally to elastically support the body 110 from the side.

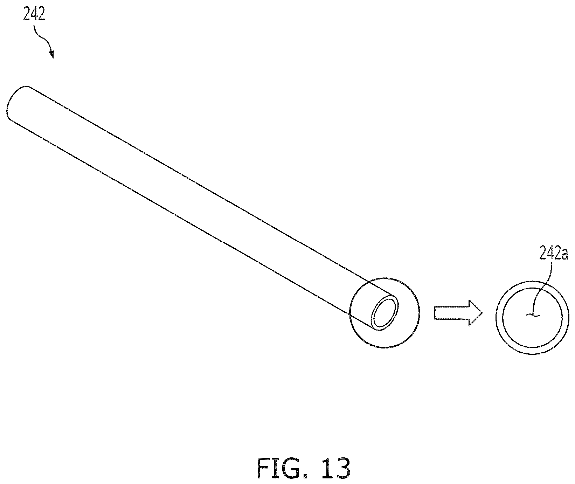

Referring to FIG. 13, the elastic body 242 may have the shape of a hollow pipe. The shape of a pipe having a hollow portion 242a may be used for elastic deformation. In other words, when the body 110 is settled in the settling space 210, the hollow portion 242a may be elastically deformed while supporting the hinge 131 upwardly. In this case, the elastic body 242 may expand laterally by elastic deformation to elastically support the body 110 laterally.

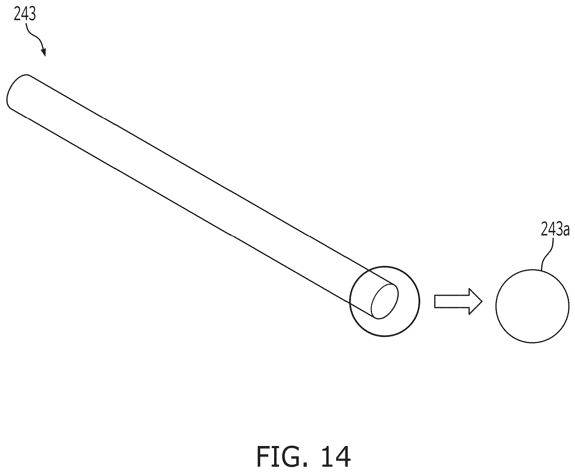

Referring to FIG. 14, the elastic body 243 may be formed in the shape of a cylinder. The shape of a cylinder filled with an elastic material may have a stronger elasticity than that of the shape of a hollow pipe. As a result, when the body 110 is settled in the settling space 210, the elastic body 243 may be elastically deformed while supporting the hinge 131 upwardly. In this case, the elastic body 243 may expand laterally by elastic deformation to elastically support the body 110 laterally.

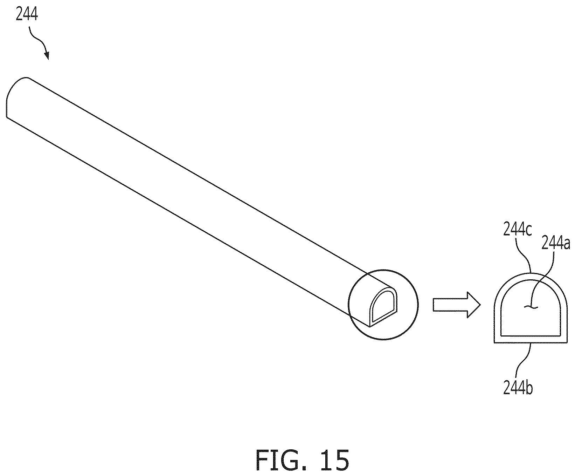

Referring to FIG. 15, the elastic body 244 may have the shape of a pipe with a hemispherical cross-section. In this case, the elastic body 244 may include a hemispherical elastic surface 244c, and a flat settling surface 244b settled onto the bottom surface or one side of the coupling substrate 200. A hollow space may be formed inside the elastic body 244, so that the elastic surface 244c may be positioned to support the hinge 131 upwardly. As a result, when the body 110 is settled in the settling space 210, the elastic body 244 may be elastically deformed while supporting the hinge 131 upwardly. At the same time, the elastic body 244 may expand laterally by elastic deformation to elastically support the body 110 laterally.

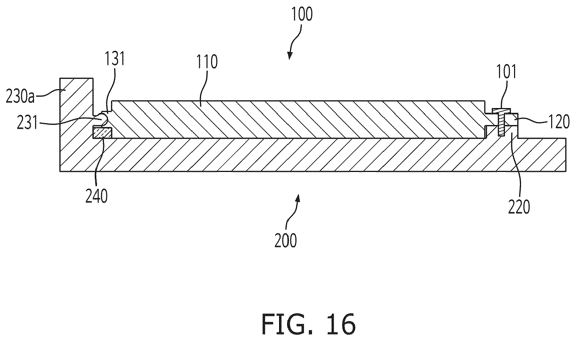

FIG. 16 is a side view of the secondary battery coupled to the coupling substrate 200 according to some embodiments of the present disclosure. The embodiment illustrated in FIG. 16 may correspond to the first embodiment described above.

Referring to FIG. 16, as the case 100 rotates by the connection between the hinge 131 and the hinge pin 231, the body 110 of the case 100 may be settled in the settling space 210 while the fixing bar 120 comes into contact with the settling bar 220. The bolt 101 may pass through the coupling holes 102 and 103 arranged to correspond to each other, so that the case 100 may be fixed to the coupling substrate 200.

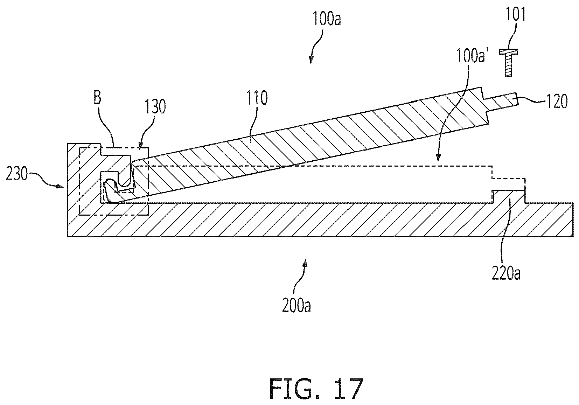

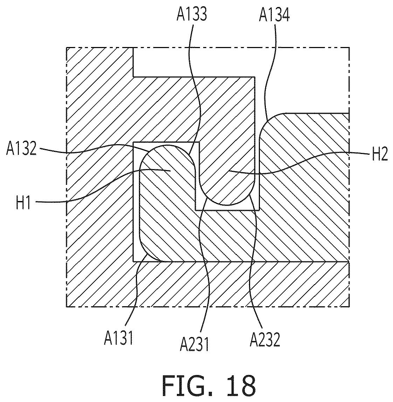

FIG. 17 shows a secondary battery being coupled with the coupling substrate 200 according to some embodiments of the present disclosure. FIG. 18 is an enlarged view of the portion B of FIG. 17 where a first hook portion H1 of the secondary battery is coupled with a second hook portion H2 of the coupling substrate according to some embodiments of the present disclosure. Hereinafter, the embodiment illustrated in FIGS. 17 and 18 may be referred to as a second embodiment.

Referring to FIGS. 17 and 18, the first coupling portion 130 formed on one side of the body 110 of a case 100a may include the first hook portion H1 that protrudes from the other side (e.g., the opposite side) of the body 110, and is bent or curved downward or upward. In some embodiments, the second coupling portion 230 formed on one side of a coupling substrate 200a may include the second hook portion H2 that may interlock with the first hook portion H1 to be connected thereto. In more detail, the first hook portion H1 may extend outward from the lower end of one side of the body 110, and may be bent or curved in a direction approximately perpendicular to the extension direction. For example, the second hook portion H2 may have a shape corresponding to the shape of the first hook portion H1, and may be formed to interlock with the first hook portion H1. The body 110 may be settled in the settling space 210 as the first hook portion H1 is connected to the second hook portion H2. As a result, the case 100a may be seated and fixed on the coupling substrate 200a.

The first hook portion H1 may include one or more curved portions A131, A132, A133, and A134 on a surface facing the second hook portion H2. For example, the first hook portion H1 and the second hook portion H2 may include the curved portions A131, A132, A133, and A134 and curved surfaces A231 and A232, respectively, at the edges of the interlocking area. The curved portions A131, A132, A133, and A134 and the curved surfaces A231 and A232 may allow the first hook portion H1 and the second hook portion H2 to more smoothly interlock with each other to be joined together.

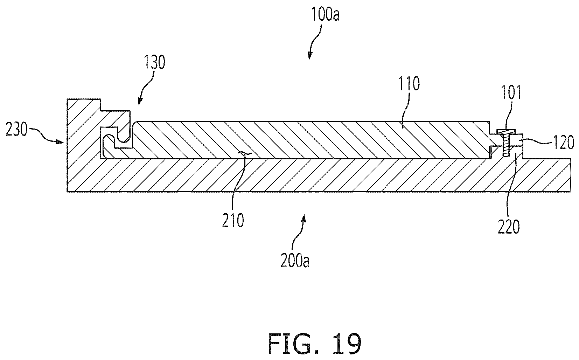

FIG. 19 is a side view of the secondary battery coupled to the coupling substrate according to some embodiments of the present disclosure. The embodiment illustrated in FIG. 19 may correspond to the second embodiment described above.

Referring to FIG. 19, as the first hook portion H1 is coupled to the second hook portion H2, the body 110 of the case 100a is settled in the settling space 210 while the fixing bar 120 comes into contact with the settling bar 220. The bolt 101 may pass through the coupling holes 102 and 103 arranged to correspond to each other, so that the case 100a may be fixed to the coupling substrate 200a.

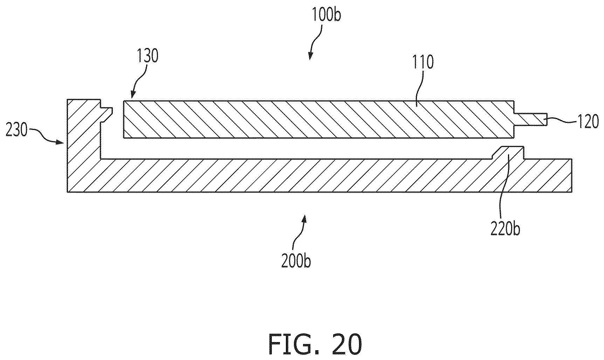

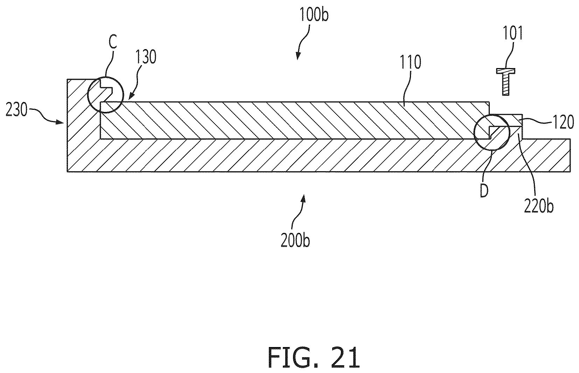

FIG. 20 shows a secondary battery that has not yet been coupled to a coupling substrate according to some embodiments of the present disclosure. FIG. 21 shows the secondary battery coupled to the coupling substrate according to some embodiments of the present disclosure. The embodiment illustrated in FIGS. 20 and 21 may be referred to as a third embodiment hereinafter.

Referring to FIGS. 20 and 21, for the coupling, the first coupling portion 130 of the body 110 of a case 100b may be inserted into the second coupling portion 230 of a coupling substrate 200b. As a result, the fixing bar 120 of the body 110 may be settled onto a settling bar 220b of the coupling substrate 200b. The fixing bar 120 that has been settled may be coupled to the settling bar 220b by the bolt 101.

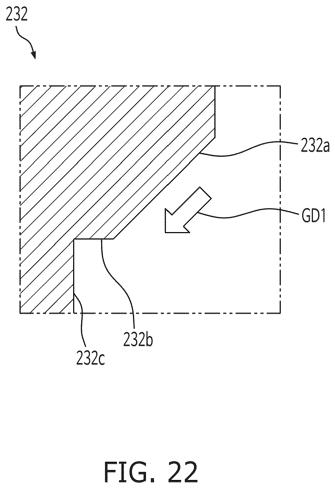

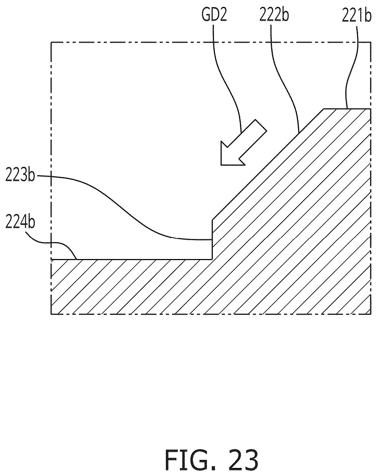

FIG. 22 is an enlarged view of a catch portion of the coupling substrate according to some embodiments of the present disclosure. FIG. 23 is an enlarged view of the settling bar of the coupling substrate according to some embodiments of the present disclosure. The embodiments illustrated in FIGS. 22 and 23 may correspond to the third embodiment described above. For example, FIG. 22 may be an enlarged view of the catch portion of the second coupling portion 230 of the coupling substrate 200b described above with reference to FIG. 21, and FIG. 23 may be an enlarged view of the settling bar 220b of the coupling substrate 200b described above with reference to FIG. 21.

Referring to FIG. 22, a catch portion 232 may include an inclined surface 232a that guides the insertion of the first coupling portion 130 of the case, a restraining surface 232b that extends laterally from the inclined surface 232a, and a stop surface 232c that extends downward from the restraining surface 232b.

The settling bar 220b of the coupling substrate 200b may be designed to guide the body 110 of the case 100b to be inserted into the settling space, and the second coupling portion 230 of the coupling substrate 200b may include the catch portion 232 designed to allow the first coupling portion 130 of the case 100b to be inserted. The first coupling portion 130 on the other side of the body 110 may be guided along the inclined surface 232a, and inserted until it reaches the stop surface 232c. For example, when the first coupling portion 130 has been inserted and settled into the lower end of the catch portion 232, its upward and downward movement may be restricted by the restraining surface 232b.

Referring to FIG. 23, the settling bar 220b may include an upper surface 221b where a coupling hole is formed, a guide surface 222b inclined downward and extending from the upper surface 221b, an end portion 223b extending downward from the guide surface 222b, and a settling portion 224b where the case is settled.

When the first coupling portion 130 has been inserted and settled into the lower end of the catch portion 232, the fixing bar 120 settled onto the settling bar 220b may be fixed to the upper surface 221b by the bolt 101. The lower surface of the body 110 may be guided by the guide surface 222b of the settling bar 220b and moved to the settling portion 224b. In other words, while the first coupling portion 130 is inserted into the lower end of the catch portion 232, the lower surface of the body 110 may be moved to the settling portion 224b by its own weight or an external force along the guide surface 222b. For example, when the lower surface of the body 110 has been moved and settled onto the settling portion 224b, the movement of the body 110 may be restricted by the end portion 223b. When, the up-and-down movement of the first coupling portion 130 is restricted by the restraining surface 232b of the catch portion 232 while the left-right movement of one side of the body 110 is restricted by the end portion 223b as described above, the fixing bar 120 may be fixed to the settling bar 220b by the bolt 101.

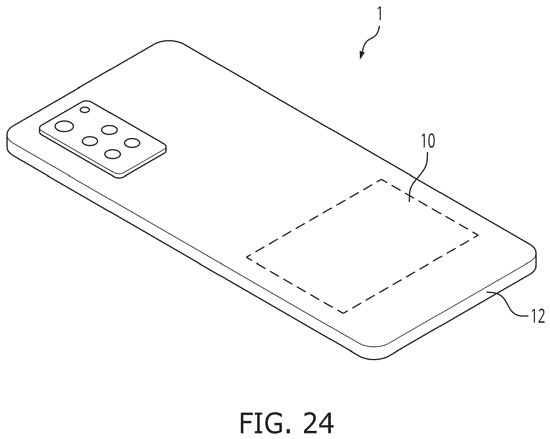

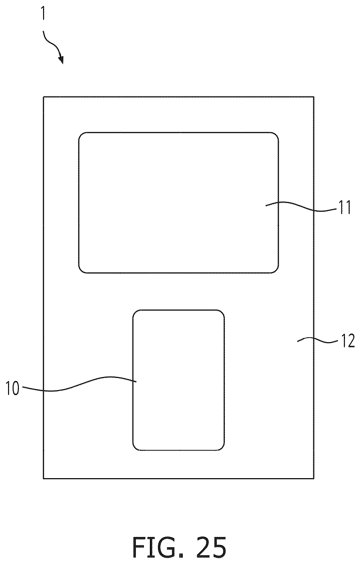

FIG. 24 illustrates an electronic device to which a secondary battery has been applied according to some embodiments of the present disclosure. FIG. 25 is a view of the electronic device including the secondary battery and a display according to some embodiments of the present disclosure.

Referring to FIGS. 24 and 25, an electronic device 1 according to some embodiments of the present disclosure may include a display 11 that performs an operation (e.g., a set or predetermined operation), a main body 12 that accommodates the display 11 therein, and the secondary battery 10 that is fixed inside the main body 12 and supplies power to the display 11.

The electronic device 1 having the secondary battery 10 may be a smart phone, but the present disclosure is not limited thereto. The electronic device 1 may be various suitable devices that use electric energy stored in the secondary battery 10 as a power source, and that uses high-performance, high-precision protection circuits.

As an example of a device that is driven by supplied power, the electronic device 1 may include the display 11. The display 11 may include various operating units that are powered and driven by electrical energy. The display 11 may include a range of operating units that are powered and driven by electrical energy. As another example, the electronic device 1 may include an application processor (AP) of a portable electronic device, a central process unit (CPU), a motor control unit (MCU) of an electric mobile device, or the like.

In an embodiment, a printed circuit board having signal transmission wiring may be placed inside the main body 12, and the display 11 may be mounted on the printed circuit board and electrically connected to other components of the electronic device 1.

The main body 12 may accommodate the display 11 and the secondary battery 10, and may form the appearance of a device driven by power. The main body 12 may be provided in various suitable forms that can support the display 11 and the secondary battery 10 placed therein, and protect them from external impacts.

The secondary battery 10 may be fixed inside the main body 12 to stably supply power to the display 11. For example, the secondary battery 10 may be accommodated and fixed in the coupling substrate 200, 200a, and 200b described above with reference to FIGS. 1 to 23. Therefore, the secondary battery 10 may include an electrode assembly, and a case that accommodates the electrode assembly. The case may include a body housing the electrode assembly, a fixing bar extending from one side of the body and including a coupling hole penetrated for fastening with the coupling substrate, and a first coupling portion that is formed on the other side (e.g., the opposite side) of the body and may be connected to a second coupling portion of the coupling substrate.

The secondary battery 10 may be a rechargeable secondary battery. The secondary battery 10 may have features substantially identical to those of the secondary battery 10 described above with reference to FIG. 5. The secondary battery 10 may include a battery cell having an electrode assembly housed inside a case made of steel use stainless (SUS), a protection circuit module placed outside the battery cell, and the like.

For example, the secondary battery 10 may be placed in a power area inside the main body 12, and may be connected to a power terminal of a printed circuit board. Accordingly, the display 11 may be driven by electric energy stored in the secondary battery 10.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A secondary battery (10) comprising:
an electrode assembly (15); and
a case (100) accommodating the electrode assembly (15), and comprising:
a body (110) accommodating the electrode assembly (15);
a fixing bar (120) extending from one side of the body (110) , and having a coupling hole penetrating therethrough for fastening with a coupling substrate; and
a first coupling portion (130) on an opposite side of the body (110) to be connected to a second coupling portion (230) of the coupling substrate.

2. The secondary battery (10) as claimed in claim 1, wherein the body (110) comprises steel use stainless (SUS).

3. The secondary battery (10) according to any one of the preceding claims, further comprising:
a first plate (111) extending in contact with one surface of the body (110), and interposed between the body (110) and the fixing bar (120); and
a second plate (112) extending in contact with another surface of the body (110), and interposed between the body (110) and the second coupling portion (230),
wherein the first plate (111) and the second plate (112) comprise a different metal from that of the body (110), and are coupled to the body (110) by welding.

4. The secondary battery (10) as claimed in claim 3, wherein:
the body (110) comprises steel use stainless (SUS); and
the first plate (111) and the second plate (112) comprise a metal material containing at least nickel.

5. The secondary battery (10) according to any one of the preceding claims, wherein:
the fixing bar (120) of the case (100) is connected to the coupling substrate by a bolt inserted into the coupling hole;
the first coupling portion (130) of the case (100) comprises a hinge; and
the second coupling portion (230) of the coupling substrate comprises a hinge pin coupled to the hinge.

6. The secondary battery (10) as claimed in claim 5, wherein an extension length of each of an upper part of the hinge configured to support an upper part of the hinge pin and a lower part of the hinge is 1/4 to 1 of a diameter of the hinge pin.

7. The secondary battery (10) according to any one of the preceding claims, wherein the fixing bar (120) and the first coupling portion (130) comprise one of aluminum, steel use stainless (SUS), or maraging steel.

8. The secondary battery (10) according to any one of the preceding claims, wherein:
the first coupling portion (130) comprises a first hook portion protruding from the opposite side of the body (110), and bent downward; and
the second coupling portion (230) comprises a second hook portion configured to be interlocked with the first hook portion and connected to the first hook portion.

9. The secondary battery (10) as claimed in claim 8, wherein the first hook portion comprises one or more curved portions on a surface facing the second hook portion.

10. An electronic device (1) comprising:
a secondary battery (10) comprising a case (100) housing an electrode assembly; and
a coupling substrate (200, 200a, 200b) configured to be attached to or detached from the case (100),
wherein the case (100) comprises:
a body (110) accommodating the electrode assembly;
a fixing bar (120) extending from one side of the body (110), and having a coupling hole penetrating therethrough for fastening with the coupling substrate (200, 200a, 200b); and
a first coupling portion (130) on an opposite side of the body (110) to be connected to the coupling substrate (200, 200a, 200b), and
wherein the coupling substrate (200, 200a, 200b) comprises:
a settling portion (224b) configured to receive the body settled therein;
a second coupling portion (230) configured to be connected to the first coupling portion (130); and
a settling bar (220b) configured to be connected to the fixing bar (120), and having a coupling hole corresponding to the coupling hole of the fixing bar (120).

11. The electronic device (1) as claimed in claim 10, wherein the body (110) comprises steel use stainless (SUS).

12. The electronic device (1) according to any one of the preceding claims 10 or 11, wherein the secondary battery (10) further comprises:
a first plate (111) extending in contact with one surface of the body (110), and interposed between the body (110) and the fixing bar (120); and
a second plate (112) extending in contact with another surface of the body (110), and interposed between the body (110) and the second coupling portion (230),
wherein the first plate (111) and the second plate (112) comprise a metal material containing nickel,
wherein the body (110) comprises steel use stainless (SUS), and
wherein the first plate (111) and the second plate (112) are coupled to the body (110) by welding.

13. The electronic device (1) according to any one of the preceding claims 10 to 12, wherein:
the fixing bar (120) of the case (100) is connected to the coupling substrate (200, 200a, 200b) by a bolt inserted into the coupling hole of the fixing bar (120) and the coupling hole of the settling bar (220b);
the first coupling portion (130) of the case (100) comprises a hinge; and
the second coupling portion (230) of the coupling substrate (200, 200a, 200b) comprises a hinge pin coupled to the hinge.

14. The electronic device (1) as claimed in claim 13, wherein the hinge pin comprises a pin to be coupled with the hinge, and two support members connected to respective ends of the pin to support the pin.

15. The electronic device (1) according to any one of the preceding claims 10 to 14, wherein the coupling substrate (200, 200a, 200b) further comprises an elastic body located at a lower portion of the second coupling portion (230) to elastically support the first coupling portion (130).
